# EUROPÄISCHE PATENTSCHRIFT

(11) **EP 3 332 148 B1**
(45) Veröffentlichungstag und Bekanntmachung des Hinweises auf die Patenterteilung: **10.07.2019**
(21) Anmeldenummer: 16723974.8
(22) Anmeldetag: 09.05.2016
(51) Int. Cl.: F16G 1/08, F16G 1/28, F16G 5/06, F16G 5/20

(54) **ANTRIEBSRIEMEN**
DRIVE BELT
COURROIE D'ENTRAINEMENT

(30) Priorität: 07.08.2015 DE 102015215149
(43) Veröffentlichungstag der Anmeldung: 13.06.2018
(73) Patentinhaber: ContiTech Antriebssysteme GmbH, 30165 Hannover (DE)
(72) Erfinder: KANZOW, Henning, 30900 Wedemark (DE); BROIANIGO, Felicitas, 30161 Hannover (DE); TEVES, Reinhard, 30926 Seelze (DE)
(74) Vertreter: Kilsch, Armin Ralph
(86) Internationale Anmeldenummer: PCT/EP2016/060247
(87) Internationale Veröffentlichungsnummer: WO 2017/025208

(56) Entgegenhaltungen:
- WO-A1-2009/066492
- DE-A1-102013 104 757

## Beschreibung

Die Erfindung betrifft einen Antriebsriemen mit einem Grundkörper aus einem elastomeren Werkstoff, vorzugsweise Keilriemen oder Keilrippenriemen, wobei der Antriebsriemen eine Decklage als Riemenrücken, eine Kraftübertragungszone mit mehreren Zugsträngen als Festigkeitsträger sowie einen Unterbau aufweist, welcher ggf. mit einer Profilierung, vorzugsweise mit einer Keilform oder einem Keilrippenprofil versehen ist, wobei die Festigkeitsträger aus Corden gebildet sind, die aus umeinander geschlagenen bzw. gedrehten Litzen bestehen (Auszwirn), wobei die Litzen wiederum aus einzelnen Garnen gezwirnt bzw. gedreht sind (Vorzwirn).

Die Cordkonstruktion eines Zugstranges ist üblicherweise so ausgebildet, dass eine Anzahl von Filamenten oder Fasern ein Garn bilden und eine Gruppe von einem oder mehreren Garnen eine so genannte Litze formen, wobei wiederum eine Gruppe von Litzen einen Cord bildet.

Antriebsriemen können als Flachriemen, Keilriemen, Keilrippenriemen, Zahnriemen und Kupplungsriemen ausgebildet sein. Von besonderer Bedeutung im Automobilbereich ist der Keilrippenriemen (KRR), der in Fahrzeugen vor allem Verwendung zum Antrieb von Nebenaggregaten findet, wie etwa zum Antrieb einer Kühlwasserpumpe eines Klimakompressors oder einer Lichtmaschine. Natürlich finden sich Keilrippenriemen auch in üblichen Haushaltsgeräten, wie zum Beispiel Waschmaschinen.

Als Drehung eines Garnes bzw. eine Cordes bezeichnet man die aufgebrachten Drehungen pro Meter des Faserverbandes eines Garnes bzw. die Drehung der Litzen beim Schlagen oder Drehen/Zwirnen eines Cordes. Diese Drehung ist nötig, um dem Faserverband bzw. dem Verband von Litzen einen Zusammenhalt zu geben und die Biegewechselbeständigkeit zu verbessern. Die Drehung kann jeweils in S- oder in Z-Richtung erfolgen.

Die Anzahl der Drehungen (Touren pro Meter (T/m)) wird auf einen Meter Länge bestimmt. Die Bezeichnung z.B. eines Garnes mit "300 Z" bedeutet, dass die Filamente des Garnes mit 300 Drehungen pro Meter in Z-Richtung gedreht bzw. gesponnen wurden.

Keilrippenriemen im Automobilbereich und auch die meisten Keilriemen nutzen als Zugstränge hauptsächlich gezwirnte Corde aus Polyester. Diese Corde sind aus drei, manchmal auch aus vier oder fünf gedrehten Litzen aufgebaut. Die Litzen werden in einem ersten Schritt einzeln aus Garnen gedreht, die aus Filamenten oder Fasern bestehen. Dies ist der so genannte "Vorzwirn". In einem zweiten Schritt werden die Litzen zusammengefasst und entgegen der Drehrichtung der Litzen zu einem Cord gedreht. Dies ist der Auszwirn. Wenn also bei der Drehrichtung der Litzen ein S-Schlag erfolgt, wird bei der Drehung der Corde in Z-Richtung geschlagen/gedreht. Dadurch wird der durch das Drehen/Zwirnen verbleibenden Drall in den Elementen kompensiert.

Meistens wird für die Anzahl der Drehungen [T/m] ein etwas höherer Wert für den Vorzwirn gewählt als für den Auszwirn. Das Drehen der Litzen und der Corde ist ein teurer Produktionsschritt. Je mehr Litzen ein Cord hat, desto mehr muss gedreht (gezwirnt) werden.

Die WO 2009/0664 92 A1 offenbart einen Keilrippenriemen mit einem höheren Elastizitätsmodul, der dadurch erreicht wird, dass die Verstärkungselemente bzw. Corde innerhalb des Keilrippenriemens aus Polyamidfasern bestehen. Die höhere Elastizität dient der leichteren Montage und soll eine Lärmentwicklung insbesondere aufgrund von Fluchtungsfehlern der Achsen der Riemenscheiben vermeiden.

Die WO 2011000637 A1 offenbart einen Antriebsriemen mit einem PET-Zugstrang mit einem Titer von mehr als 3600 dtex, wobei auch 2-Litzencorde erwähnt werden. Der Vorzwirn ist erfolgt mit ≥ 180 T/m und der Auszwirn mit ≤ 160 T/m. Solche Corde mit geringem Titer können nur in einem begrenzten Leistungsbereich eingesetzt werden. Bei hoher Leistungsabnahme, z.B. mit einem größeren Generator, werden sie überlastet, die Riemen könnten durch Cordausspulung oder durch zu große Längung ausfallen. Außerdem sind die hohen Drehungen beim Verzwirnen/Verdrehen kostspielig.

Die WO 2012143241 A1 offenbart unter anderem einen Aramidcord mit zwei Litzen mit einem Vorzwirn von 250 bis 500 T/m und einem Auszwirn von 150 bis 300 T/m. Aramid ist ein relativ teures Material. Außerdem ist die Anzahl der Drehungen sehr hoch, wodurch die Kosten für die Herstellung steigen.

Für die Erfindung bestand daher die Aufgabe, einen Cord für einen Antriebsriemen bereitzustellen, der zum einen möglichst kostengünstig gefertigt werden kann und zum anderen übermäßige Längungen während des Betriebs nicht erlaubt.

Gelöst wird diese Aufgabe durch die Merkmale des Hauptanspruchs. Weitere vorteilhafte Ausbildungen sind in den Unteransprüchen offenbart.

Dabei bestehen die Corde im wesentlichen aus Polyethylenterephthalat (PET) und aus lediglich zwei Litzen, wobei die Anzahl der Drehungen der zu einem Cord geschlagenen bzw gedrehten Litzen (Auszwirn) und die Anzahl der Drehungen der zu einer Litze gedrehten Garne (Vorzwirn) sich um maximal 10 Drehungen bzw. Touren pro Meter [T/m]unterscheiden. Der Vorteil dieser erfindungsgemäßen Ausbildung besteht darin, dass die Zahl der Drehungen im Vergleich zu den üblichen 3-Litzen-Corden deutlich gesenkt ist. Außerdem ermöglicht die erfindungsgemäße Ausführung die Verwendung von so genannten "Direkt-Kabliermaschinen, die das Drehen der Litzen und das Schlagen/Zwirnen des Cordes in einem Schritt ermöglichen.

Eine vorteilhafte Weiterbildung besteht darin, dass die Anzahl der Drehungen zwischen 60 und 175 T/m liegen, vorzugsweise zwischen 90 und 140 T/m. Der Vorteil dieser Ausbildung besteht darin, dass nur soviel an Drehungen durchgeführt wird, wie für den Anwendungszweck erforderlich ist. Jedoch sollte der Auszwirn nicht zu niedrig gewählt werden, da dadurch die Schneidfähigkeit der Corde schlechter wird.

Eine weitere vorteilhafte Ausbildung besteht darin, dass die Corde einen Titer (Gesamttiter) von 3650 bis 9000 dTex aufweisen, insbesondere von 6200 bis 7000 dTex. Mit einer solchen Gewichtsnummerierung erzielt man die besten Ergebnisse bei den oben genannten Einsätzen im Automobilbereich und liegt in einem günstigen Kostenrahmen bei der Herstellung.

Eine weitere vorteilhafte Ausbildung besteht darin, dass die Corde so verstreckt bzw. vorgereckt sind, dass der Schrumpfweg der Corde bei 150° C größer als 2% ist und die Schrumpfkraft zwischen 0,0018 und 0,0051 N/dtex liegt, vorzugsweise zwischen 0,0022 und 0,0038 N/dtex. Eine solche Ausbildung führt dazu, dass sich die Corde während der Betriebsbelastungen kaum längen.

Die Heißschrumpfkraft und der Heißschrumpf (Heißschrumpfweg) werden in Öl bestimmt.

Zur Bestimmung der Heißschrumpfkraft wird ein Cord auf 800mm Länge mit einer Vorlast von 0,2 cN/tex des Gesamttiters zwischen zwei festen Klemmen eingespannt und anschließend 3 min in ein Temperierbad von 150°C eingetaucht und dann die sich aufbauende Schrumpfkraft ermittelt. Bei einem Cord 1100x2x3 dtex beträgt die Vorlast 132 cN, also 1,3 N.

Zur Bestimmung des Heißschrumpfes (Schrumpfweg) wird ein Cord auf der einen Seite fest eingeklemmt und auf der anderen Seite mit einer konstanten Vorlast von 0,2 cN/tex des Gesamttiters beaufschlagt. Eine Strecke von 800 mm des mit der Vorlast gespannten Cordes wird 3 min in ein Temperierbad von 150°C eingetaucht und der Schrumpfweg des Cordes bei der genannten Vorspannung ermittelt.

Eine weitere vorteilhafte Ausbildung zur Verbesserung der Schneidfähigkeit der Corde besteht darin, dass der Cord zur Versteifung einer Behandlung mit Isocyanaten oder geblockten Isocyanaten unterworfen ist.

Eine weitere vorteilhafte Ausbildung besteht darin, dass der Antriebsriemen aus peroxidisch vernetztem EPDM oder EPM besteht. Diese Materialien zeichnen sich durch hohe Wärmebeständigkeit aus, verspröden daher weniger und erreichen dadurch eine sehr gute Abriebbeständigkeit.

Eine weitere vorteilhafte Ausbildung besteht darin, dass der Cord einen Anteil von mindestens 80 % der zylinderförmigen Cordebene beinhaltet, d.h. dass der Anteil der Lücken zwischen den Corden/Cordwindungen kleiner als 20% der durch die Cordebene definierten Zylinderfläche ist. Bei eine solchen Ausbildung verhindert man, dass bei hoher Belastung bzw. bei Überlastung der Corde eine Neigung zum Ausspulen entsteht.

Das folgend beschriebene Beispiel zeigt die erfindungsgemäße Ausbildung eines Keilrippenriemens. Dazu wurde unter Verwendung einer Direkt-Kabliermaschine, die das Drehen der Litzen und das Schlagen/Zwirnen des Cordes in einem Schritt ermöglicht, ein direkt kablierter PET-Cord mit der Konstruktion 3300 dtex x 2 (125/125 T/m) mit einer Schrumpfkraft von 21 N (0,0032 N/dtex)hergestellt und in einen Keilrippenriemen einvulkanisiert, dessen Mischung aus peroxidisch vernetztem EPDM bestand. Durch Verwendung einer Direkt-Kabliermaschine, die das Drehen der Litzen und das Schlagen/Zwirnen des Cordes in einem Schritt ermöglicht, kann die Herstellung der Corde preiswerter erfolgen.

Dieser so konstruierte Keilrippenriemen wurde nach einem Standard-Pflichtenheft geprüft. Es wurden keinerlei Nachteile im Vergleich zu Keilrippenriemen mit Zugsträngen aus Corden mit höherer Litzenanzahl festgestellt. Der erfindungsgemäße Antriebsriemen verhielt sich genauso wie der Antriebsriemen mit Standardcorden 1100 dtex x 2 x 3 (150/125 T/m) mit einer Heißschrumpfkraft von 20 N, der herkömmlich zusammengedreht wird.

## Patentansprüche

1. Antriebsriemen mit einem Grundkörper aus einem elastomeren Werkstoff, vorzugsweise Keilriemen oder Keilrippenriemen, wobei der Antriebsriemen eine Decklage als Riemenrücken, eine Kraftübertragungszone mit mehreren Zugsträngen als Festigkeitsträger sowie einen Unterbau aufweist, welcher ggf. mit einer Profilierung, vorzugsweise mit einer Keilform oder einem Keilrippenprofil versehen ist, wobei die Festigkeitsträger aus Corden gebildet sind, die aus umeinander geschlagenen bzw. gedrehten Litzen bestehen (Auszwirn), wobei die Litzen wiederum aus einzelnen Garnen gezwirnt bzw. gedreht sind (Vorzwirn), **dadurch gekennzeichnet, dass** die Corde im wesentlichen aus Polyethylenterephthalat (PET) und aus lediglich zwei Litzen bestehen, wobei die Anzahl der Drehungen der zu einem Cord geschlagenen bzw. gedrehten Litzen (Auszwirn) und die Anzahl der Drehungen der zu einer Litze gedrehten Garne (Vorzwirn) sich um maximal 10 Drehungen bzw. Touren pro Meter [T/m]unterscheiden.

2. Antriebsriemen nach Anspruch 1, bei dem die Anzahl der Drehungen zwischen 60 und 175 T/m liegen, vorzugsweise zwischen 90 und 140 T/m.

3. Antriebsriemen nach Anspruch 1 oder 2, bei dem die Corde einen Titer (Gesamttiter) von 3650 bis 9000 dTex aufweisen, insbesondere von 6200 bis 7000 dTex.

4. Antriebsriemen nach einem der Ansprüche 1 bis 3, bei dem die Corde so verstreckt bzw. vorgereckt sind, dass der Schrumpfweg der Corde bei 150° C größer als 2% ist und die Schrumpfkraft zwischen 0,0018 und 0,0051 N/dtex liegt, vorzugsweise zwischen 0,0022 und 0,0038 N/dtex.

5. Antriebsriemen nach einem der Ansprüche 1 bis 4, bei dem der Cord s zur Versteifung einer Behandlung mit Isocyanaten oder geblockten Isocyanaten unterworfen ist.

6. Antriebsriemen nach einem der Ansprüche 1 bis 5, bei dem der elastomere Werkstoff aus peroxidisch vernetztem EPDM oder EPM besteht.

7. Antriebsriemen nach einem der Ansprüche 1 bis 6, bei dem der Cord einen Anteil von mindestens 80 % der zylinderförmigen Cordebene beinhaltet.

## Claims

1. Drive belt having a main body formed of an elastomeric material of construction, preferably a v-belt or v-ribbed belt, said drive belt including a top layer as belt backing, a power transmission zone having two or more tensile strands as strength members, and also a substructure optionally provided some profiling, preferably having a v-shape or a v-rib profile, the strength members being formed of cords consisting of mutually twisted plies (final twist), the plies being in turn twisted out of individual yarns (first twist), **characterized in that** the cords consist essentially of polyethylene terephthalate (PET) and of merely two plies, the number of turns introduced into the plies twisted into a cord (final twist) and the number of turns introduced into the yarns twisted into a ply (first twist) differing by not more than 10 turns per meter [t/m] .

2. Drive belt according to Claim 1 wherein the number of turns is between 60 and 175 t/m, preferably between 90 and 140 t/m.

3. Drive belt according to Claim 1 or 2 wherein the cords have a linear density (total linear density) of from 3650 to 9000 dtex, especially from 6200 to 7000 dtex.

4. Drive belt according to any one of Claims 1 to 3 wherein the cords have been drawn/preoriented such that the shrinkage of the cords at 150°C is greater than 2% and the shrink force is between 0.0018 and 0.0051 N/dtex, preferably between 0.0022 and 0.0038 N/dtex.

5. Drive belt according to any one of Claims 1 to 4 wherein the cord s has been subjected to a stiffening treatment with isocyanates or blocked isocyanates.

6. Drive belt according to any one of Claims 1 to 5 wherein the elastomeric material of construction consists of peroxidically crosslinked EPDM or EPM.

7. Drive belt according to any one of Claims 1 to 6 wherein the cord comprises not less than 80% of the cylindrical cord plane.

## Revendications

1. Courroie d'entraînement comprenant un corps de base en un matériau élastomère, de préférence courroie trapézoïdale ou courroie trapézoïdale à nervures, la courroie d'entraînement comportant une couche de couverture en tant que dos de la courroie, une zone de transmission de force pourvue de plusieurs câbles de traction en tant que renforts, ainsi qu'une sous-structure, qui est éventuellement pourvue d'un profilage, de préférence d'une forme de coin ou d'un profil trapézoïdal à nervures, les renforts étant formés par des cordes qui sont constituées par des torons enveloppés les uns des autres ou tordus (torsade extérieure), les torons étant eux-mêmes torsadés ou tordus à partir de fils individuels (torsade préalable), **caractérisée en ce que** les cordes sont essentiellement constituées de polytéréphthalate d'éthylène (PET) et de seulement deux torons, le nombre de torsions des torons enveloppés ou tordus pour obtenir une corde (torsade extérieure) et le nombre de torsions des fils tordus pour obtenir un toron (torsade préalable) se différenciant par au plus 10 torsions ou tours par mètre [t/m].

2. Courroie d'entraînement selon la revendication 1, dans laquelle le nombre de torsions est compris entre 60 et 175 t/m, de préférence entre 90 et 140 t/m.

3. Courroie d'entraînement selon la revendication 1 ou 2, dans laquelle les cordes présentent un titre (titre total) de 3 650 à 9 000 dtex, notamment de 6 200 à 7 000 dtex.

4. Courroie d'entraînement selon l'une quelconque des revendications 1 à 3, dans laquelle les cordes sont étirées ou prétendues de telle sorte que la distance de contraction des cordes à 150 °C soit supérieure à 2 % et que la force de contraction soit comprise entre 0,0018 et 0,0051 N/dtex, de préférence entre 0,0022 et 0,0038 N/dtex.

5. Courroie d'entraînement selon l'une quelconque des revendications 1 à 4, dans laquelle la corde s pour le renfort est soumise à un traitement avec des isocyanates ou des isocyanates bloqués.

6. Courroie d'entraînement selon l'une quelconque des revendications 1 à 5, dans laquelle le matériau élastomère est constitué par de l'EPDM ou de l'EPM réticulé par voie peroxydique.

7. Courroie d'entraînement selon l'une quelconque des revendications 1 à 6, dans laquelle la corde contient une proportion d'au moins 80 % des plans de corde cylindriques.
